# EUROPEAN PATENT SPECIFICATION

(11) **EP 3 523 897 B1**
(45) Date of publication and mention of the grant of the patent: **14.07.2021**
(21) Application number: 16790940.7
(22) Date of filing: 28.10.2016
(51) Int. Cl.: H04L 27/26, H04L 5/00, H04L 1/00

(54) **SWITCHING FROM ONE OFDM MODE TO ANOTHER**
UMSCHALTEN VON EINEM OFDM-MODUS ZU EINEM ANDEREN
COMMUTATION D'UN MODE OFDM À UN AUTRE

(43) Date of publication of application: 14.08.2019
(73) Proprietor: Huawei Technologies Co., Ltd., Longgang District Shenzhen, Guangdong 518129 (CN)
(72) Inventor: GONG, Xitao, 80992 Munich (DE); ZHAO, Zhao, 80992 Munich (DE); LONG, Yi, 80992 Munich (DE); GUO, Zhiheng, 80992 Munich (DE); SCHELLMANN, Malte, 80992 Munich (DE)
(74) Representative: Gill Jennings & Every LLP
(86) International application number: PCT/EP2016/076141
(87) International publication number: WO 2018/077432

(56) References cited:
- US-A1- 2013 022 090
- HUAWEI ET AL: "Overview of 5G frame structure", 3GPP DRAFT; R1-162157, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 2 April 2016 (2016-04-02), XP051080003, Retrieved from the Internet: URL:http://www.3gpp.org/ftp/tsg_ran/WG1_RL 1/TSGR1_84b/Docs/ [retrieved on 2016-04-02]
- PANASONIC: "Resource assignment for mixed numerologies", 3GPP DRAFT; R1-1610217, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051150236, Retrieved from the Internet: URL:http://www.3gpp.org/ftp/Meetings_3GPP_ SYNC/RAN1/Docs/ [retrieved on 2016-10-09]
- LG ELECTRONICS: "Discussion on frequency-alignment and resource block structure for different numerologies", 3GPP DRAFT; R1-1609234 RB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051149280, Retrieved from the Internet: URL:http://www.3gpp.org/ftp/Meetings_3GPP_ SYNC/RAN1/Docs/ [retrieved on 2016-10-09]
- HUAWEI ET AL: "On numerology determination for data channel", 3GPP DRAFT; R1-1611652, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 5 November 2016 (2016-11-05), XP051190058, Retrieved from the Internet: URL:http://www.3gpp.org/ftp/tsg_ran/WG1_RL 1/TSGR1_87/Docs/ [retrieved on 2016-11-05]
- HUAWEI ET AL: "Dynamic resource allocation of different numerologies", 3GPP DRAFT; R1-1701661, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 12 February 2017 (2017-02-12), XP051208828, Retrieved from the Internet: URL:http://www.3gpp.org/ftp/Meetings_3GPP_ SYNC/RAN1/Docs/ [retrieved on 2017-02-12]
- HUAWEI ET AL: "Discussion on UE behavior on mixed numerology carrier", 3GPP DRAFT; R1-1609425, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051149468, Retrieved from the Internet: URL:http://www.3gpp.org/ftp/Meetings_3GPP_ SYNC/RAN1/Docs/ [retrieved on 2016-10-09]
- INTEL CORPORATION: "Capability to support multiple numerologies", 3GPP DRAFT; R1-166554 UE CAPABILITY FOR MULTIPLE NUMEROLOGIES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051125446, Retrieved from the Internet: URL:http://www.3gpp.org/ftp/Meetings_3GPP_ SYNC/RAN1/Docs/ [retrieved on 2016-08-21]
- ZTE ET AL: "About Slot structure and Scheduling Units for NR", 3GPP DRAFT; R1-1608964 ABOUT SLOT STRUCTURE AND SCHEDULING UNITS FOR NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. Lisbon, Portugal; 20161010 - 20161014 9 October 2016 (2016-10-09), XP051149017, Retrieved from the Internet: URL:http://www.3gpp.org/ftp/Meetings_3GPP_ SYNC/RAN1/Docs/ [retrieved on 2016-10-09]

## Description

### TECHNICAL FIELD

This disclosure relates to switching the numerology that is in use for communications between devices in a communication system.

### BACKGROUND

In an orthogonal frequency division multiplexing (OFDM) communications link, for example, the numerology of the link is the set of parameters that define the OFDM structure. Examples of parameters that may be encompassed by the numerology are subcarrier spacing, cyclic prefix size, constellation size, modulation scheme and fast fourier transformation (FFT) size. In a simple system these parameters might be held constant for all devices operating in the system. In other systems, the parameters might be varied to provide greater resistance to interference or greater data rates for specific devices, or to reduce the amount of spectral bandwidth used by one device so as to make room for another device to communicate. In other systems numerologies define similar parameters.

In current Long Term Evolution(LTE)/ LTE-Advanced (LTE-A) systems, there are mainly three OFDM numerology types in use: 15 kHz with normal cyclic prefix (CP), 15 kHz with extended CP, and 7.5 kHz with extended CP. The latter two types with extended CP are mainly specified for multimedia broadcast multicast service (MBMS), and the case with 7.5 kHz is rarely used. Given such a limited number of numerologies, the numerology configuration in LTE/LTE-A is mainly performed in two ways:
- For initial access, the cell search procedure starts with broadcasting two synchronization signals: the Primary Synchronization Signal (PSS) and the Secondary Synchronization Signal (SSS). A UE blindly detects the CP length by checking for the SSS.
- For Multimedia Broadcast Single Frequency Network (MBSFN) subframes where extended CP is used, a system information bock (SIB) sent to the UEs informs them of the locations of specific MBSFN frames that will use the extended CP numerology.

Flexible choice of numerology is expected to be a feature of future mobile systems such as 3^{rd} Generation Partnership Project (3GPP) 5^{th} Generation (5G) New Radio (NR). These systems are expected to support a large operational frequency spectrum, ranging from sub GHz (e.g. 700MHz) to millimetre wave bands (e.g. 100 GHz). A large set of OFDM waveform numerologies might be available. It is conceivable that more than one numerology might be available in a single carrier band. The possible OFDM waveform numerologies could include the following:

| **OFDM subcarrier spacing** | **OFDM CP length** |
|---|---|
| 3.75KHz | Normal, Extended |
| 7.5 KHz | Normal, Extended |
| 15 KHz | Normal, Extended |
| 30 KHz | Normal, Extended |
| 60 KHz | Normal, Extended |
| 120 KHz | Normal, Extended |
| 240 KHz | Normal, Extended |

If the numerology configuration schemes of LTE/LTE-A were to be applied to configuring the use of a large number of numerologies in 5G NR, some problems might arise:
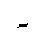 Firstly, having UEs perform blind detection of numerology from among a large number of possible types could incur excessive complexity in the initial access procedure.
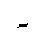 Secondly, if specific subframes with different numerologies were to be configured using the system information block (SIB), the locations of those subframes would be static, or semi-static. This constrains the flexibility with which the radio resources can be used.

Furthermore, it would be advantageous to be able to configure different numerologies on the same frequency band in a time division multiplexing manner, for example by placing control and signalling context in the resources also configured with a specific numerology. The LTE/LTE-A system does not accommodate this.

There is a need for an improved scheme to allocate numerologies.

US 2013/0022090 relates to dynamic cyclic prefix mode for uplink radio resource management.

HUAWEI ET AL: "Discussion on UE behavior on mixed numerology carrier", 3GPP DRAFT; R1-1609425, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Lisbon, Portugal; 20161010- 20161014 9 October 2016 relates to UE behavior on mixed numerology carrier.

INTEL CORPORATION: "Capability to support multiple numerologies", 3GPP DRAFT; R1-166554 UE CAPABILITY FOR MULTIPLE NUMEROLOGIES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Gothenburg, Sweden; 20160822- 20160826 21 August 2016 relates to capability to support multiple numerologies.

ZTE ET AL: "About Slot structure and Scheduling Units for NR", 3GPP DRAFT; R1-1608964 ABOUT SLOT STRUCTURE AND SCHEDULING UNITS FOR NR, 3RD GENERATION PARTNERSHIP PROJECT (3GPP), MOBILE COMPETENCE CENTRE ; 650, ROUTE DES LUCIOLES ; F-06921 SOPHIAANTIPOLIS CEDEX, vol. RAN WG1, no. Lisbon, Portugal; 20161010- 20161014 9 October 2016 relates to about slot structure and scheduling units for NR.

### SUMMARY

Various aspects of the present disclosure have been defined in the independent claims. Further technical features of each of these aspects have been defined in the respective dependent claims.

In each aspect the numerology type may be defined with reference to features that include any one or more of subcarrier spacing, cyclic prefix length and/or other features of the numerology as applied when it is being used. A numerology location may define the time(s) and/or frequency band(s) where the numerology is to be active.

### BRIEF DESCRIPTION OF DRAWINGS

The present disclosure will now be described by way of example with reference to the accompanying drawings. In the drawings:
Figure 1 shows schematically some components of a communication system.
Figure 2 illustrates a handover procedure.
Figure 3 illustrates a signalling procedure for dynamic operation.
Figure 4 shows options for locating the physical downlink control channel (PDCCH) containing the DCI for secondary numerology configuration.
Figure 5 shows a signalling procedure for semi-persistent operation.
Figure 6 shows options for locating the PDCCH containing the DCI for secondary numerology configuration.
Figure 7 and 8 show schemas for identifying the resource block(s) and subframe(s) where a specific numerology is to be used.
Figure 9 shows options for locating the PDCCH containing the DCI for secondary numerology configuration.

### DESCRIPTION OF ASPECTS

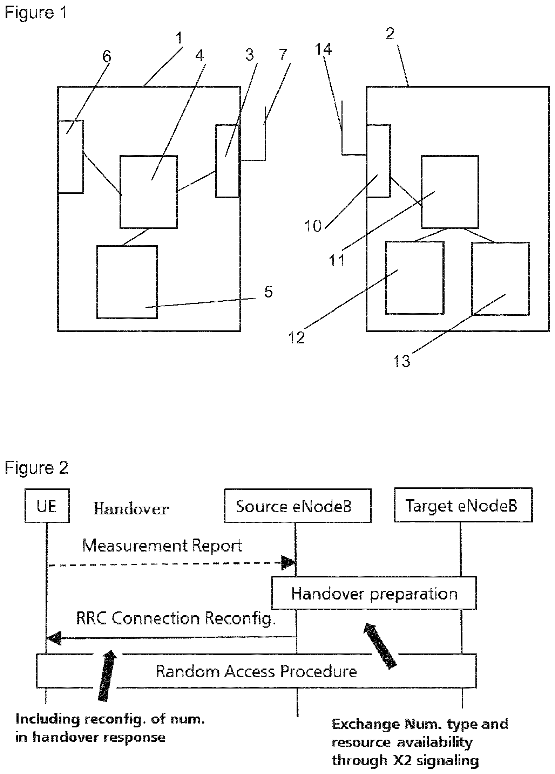

Figure 1 shows part of a wireless communication system comprising a base device 1, such as a base station, and a terminal 2 such as a mobile phone or other endpoint. The base device comprises a wireless transceiver 3, a processor 4, a memory 5 and a communication interface 6 to a further network. The transceiver is coupled to an antenna 7. The transceiver operates as a radio front end to transmit and receive signals via the antenna. The processor 4 executes code stored in a non-transient way in memory 5. The code is such that the processor is configured to perform the functions described of it below. The processor can communicate with the further network via the interface 6. The network may be the remainder of a communication network of which the components in figure 1 form part, for example a cellular network. The terminal comprises a transceiver 10, a processor 11, a memory 12 and a user interface 13. The transceiver 10 is coupled to an antenna 14. The transceiver operates as a radio front end to transmit and receive signals via the antenna. The processor 11 executes code stored in a non-transient way in memory 12. The code is such that the processor 11 is configured to perform the functions described of it below.

In the description below the base device or base station and the terminal or user equipment (UE) are described as performing various functions. These can be performed by the processors 4, 11 operating in accordance with the code stored in memories 5, 12 to process data, cause their respective transceivers 3, 10 to transmit data, configure their respective transceivers to receive data, process the received data, store state and perform other functions.

In the description below terminology typically used with reference to LTE networks will be used. However, it will be appreciated that the principles are not limited to LTE and can be applied to other networks.

The description below relates to features of telecommunication systems that can permit them to operate with multiple numerologies. In the description, the following terms will be used:
- "Primary numerology": refers to a default or initial numerology. Devices such as base device 1 and terminal 2 may be configured at start-up or by other mechanisms to use this numerology when firs communicating (at least for traffic data) with another device. The devices may be configured to use different primary numerologies for different frequency carriers/bands and/or in different networks. Providing for this numerology can facilitate UEs to perform initial access processes, acquire basic control channels and perform initial data transmission and/or reception.
- "Secondary numerology": refers to a numerology used by a device for communicating with another device after the primary numerology has been used, preferably after the primary numerology has been used in the same communication session. There may be different secondary numerologies used and/or available for different frequency carriers/bands. Features of the secondary numerology such as its subcarrier spacing or its cyclic prefix length may be, or may not be, multiples or submultiples of the corresponding feature of the primary numerology for the same carrier.
- "Resource block" (RB): refers to a block of communication resource defined by a specific number of subcarriers (A) and symbols (B) (e.g. A=12, B=7, as in LTE with normal CP). Different RBs may be defined for different numerologies.

To facilitate initial communications between a UE and a base device it is preferable for a primary numerology to be defined. Then the UE knows how to try and detect communications from the base device. If no primary numerology is defined the UE could perform blind detection on received signals to detect a numerology initially in use by the base device. However, this may consume power and may take a considerable time. The primary numerology may be stored in memories 5, 12. There may be different primary numerologies stored, at least in memory 12 of the UE, for different carriers or frequency bands in which the UE may operate.

When the UE is in a communication session with the base device it can initially operate to receive and/or transmit data using the primary numerology type. Subsequently, the devices may switch to using a secondary numerology which is different from the primary numerology. Different primary and/or secondary numerologies may be used at the same time on the downlink and the uplink. In order for the base device to signal to the UE a specific secondary numerology that is to be used, the following context information can be defined in the signalling:
- SN-Indicator. This is an indicator to indicate corresponding downlink control information (DCI) for secondary numerology configuration. The SN-Indicator may, for example, have a length of one or two bits, using the techniques described below. The SN-Indicator may comprise or be in conjunction with an identifier of one or more UEs to which it applies. That identifier may operate as for the known Radio Network Temporary Identifier (RNTI).
- SN-TypeConfig: This is an indicator of a secondary numerology type to be used. It may be indicated in two ways: either directly with reference to a number allocated to the new numerology type; or relatively, by reference to the primary or current numerology type. In the former case, the indicator may have, e.g. 4 bits. In the latter case it may have fewer bits, e.g. 2 bits. To refer to a numerology in a relative sense the bits of the indicator may indicate, for example the multiple of the current/primary numerology's subcarrier spacing that the secondary numerology is to have (e.g. 0=twice and 1=half). Other features such as cyclic prefix length may be indicated in a similar way. Alternatively, the UE may store one or more lookup tables that indicate, for each primary/current numerology that may be in use, the offset from that numerology to a new secondary numerology that is indicated by the bits of the indicator: e.g. 00=half subcarrier spacing, shorter cyclic prefix length, 01=same subcarrier spacing, shorter cyclic prefix length and so on). There may be different look up tables for different carriers. Alternatively, the lookup table(s) may directly indicate the new secondary methodology.
- SN-RBIdxConfig and SN-SubframeldxConfig: These indicate a resource location where the secondary numerology is to be used. The resource may be indicated by an RB index and a subframe index.

Further information may be signalled, for example hybrid automatic repeat quest (HARQ) process information, and TPC information. In order to signal a UE to adopt a particular secondary numerology the base device sends the appropriate context information to the UE. The processor of the UE interprets that information and then adopts the signalled numerology, either generally or only in the specified resource location(s).

When multiple numerologies are in use, initial access by a UE to a base device may be performed as follows.
- Regardless of which numerology the transmission will use, initial access signals (e.g. synchronization sequences PSS/SSS (primary/secondary synchronization sequences), PBCH, partially PDCCH) are sent using the primary numerology.
- At the UE, the CP length in use by the base device may be blindly detected using SSS sequences. The indication of the PBCH (physical broadcast channel) is sent using the primary numerology, together with other critical system information for access. If mixed-numerology is statically allocated (as will be discussed below), the secondary numerology type (SN-TypeConfig) and its location of resources (SN-RBIdxConfig and SN-SubframeldxConfig) may be explicitly signalled, e.g. to all UEs, through the master information block (MIB) or the system information block (SIB).

In order for a system to perform handover of a UE from one base device to another when multiple numerologies are available the following may be observed. When the UE is using the primary numerology handover can be performed similarly to the normal method. When a secondary numerology type is being used, the standard procedure may be modified as follows (see figure 2):
- In preparation for handover, the source and target base devices (e.g. eNodeBs) will exchange information regarding which secondary numerology types they support and which numerology type is in use by the UE. This information may be transmitted through X2 signalling. At this stage, the source eNB can make a decision to hand off the UE and can issue a handover request message to the target eNB passing the necessary information to prepare the handover at the target side. That may include a request to continue the use of secondary numerology type on the same carrier or a different carrier, considering the availability of resources at the target eNB. If the eNB has no resource are available to support the secondary numerology type in use by the UE, the target eNB can prepare the available resources with a different numerology type, and may switch the UE to that numerology type before the handover. Then the target eNB sends the handover request acknowledge to the source eNB, passing the agreed numerology type and resource location.
- The source eNB informs the UE with the Radio Resource Control (RRC) Connection Reconfiguration message with necessary parameters including system information of reconfiguration of numerology type and assigned resources.

A UE can be configured to adopt a secondary numerology type in multiples ways. Some examples are as follows:
- Dynamic mode: On-demand configuration based on a dynamic scheduler.
- Semi-static mode: Semi-persistent configuration. The configuration may be based on RRC signalling.
- Static mode: The UE can be configured, either at initial access/handover or later, to adopt a secondary numerology type and continue using it until instructed otherwise.

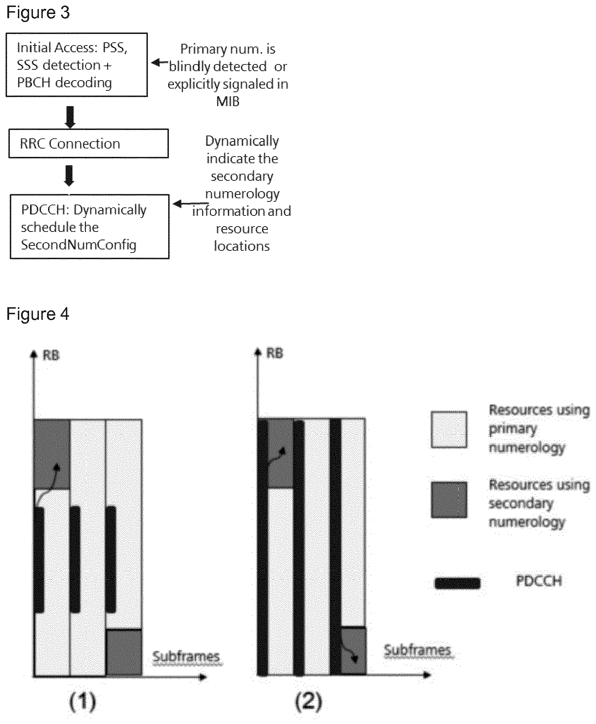

The dynamic mode may be advantageous in that it may permit the UE to use multiple numerologies flexibly to help meet diverse requirements of multiple services. As described above, the primary numerology is informed by default (e.g. standardization) or informed by system information (e.g. by MIB). Then in dynamic mode the secondary numerology/ies to be used is/are configured according to a dynamic schedule. In order to operate dynamically with a secondary numerology, the following steps can be taken.
- Enable dynamic configuration by the scheduler, e.g. using PDCCH signalling. The signalling procedure is depicted in figure 3.
- An SN-Indicator is sent from the base device to the UE to indicate downlink control information (DCI) for configuring the secondary numerology type. To permit dynamic numerology usage to be signalled to the UE it is convenient to define a new DCI for secondary numerology configuration (SNConfig). The search space for such a DCI can be UE-specific. Two definition options can be provided for such a DCI.
   ▪ Option1: A new DCI format can be defined to schedule secondary numerology for Physical Downlink Shared Channel(PDSCH)/ Physical Uplink Shared Channel (PUSCH) transmission. That format can include an SN-TypeConfig (an indication of a numerology type, which may be a few bits long); an SN-RBIdxConfig and a SN-SubframeldxConfig (indicators of the RB and the subframe index defining the resource to which the new numerology is to be applied). Further control information may be provided, for example any of HARQ process information, transmit power control (TPC) information and precoding information.
   ▪ Option 2: The DCI for dynamic numerology usage may be similar to the current DCI format in LTE but with the addition of an indication of numerology type and resource assignment (i.e. SN-TypeConfig and SN-RBIdxConfig and SN-SubframeldxConfig as discussed above).

As indicated in figure 4, two options are available for locating the PDCCH containing the DCI for secondary numerology configuration.
- Option1: As shown in figure 4(1), the PDCCH is only transmitted with the primary numerology. The PDCCH search space is pre-assigned by system information and is UE-specific. The DCI for the secondary numerology configuration is contained in the PDCCH. It schedules the secondary numerology resource usage.
- Option 2: As shown in figure 4(2), the PDCCH is transmitted with both the primary and the secondary numerology. The PDCCH transmitted with the primary or secondary numerology contains the DCI for data transmission with the primary or secondary numerology, respectively. In the case of the PDCCH containing secondary numerology control information, it is desirable for system information to notify the UE of the secondary numerology type and the PDCCH location beforehand to avoid excessive blind decoding attempts by the UE.

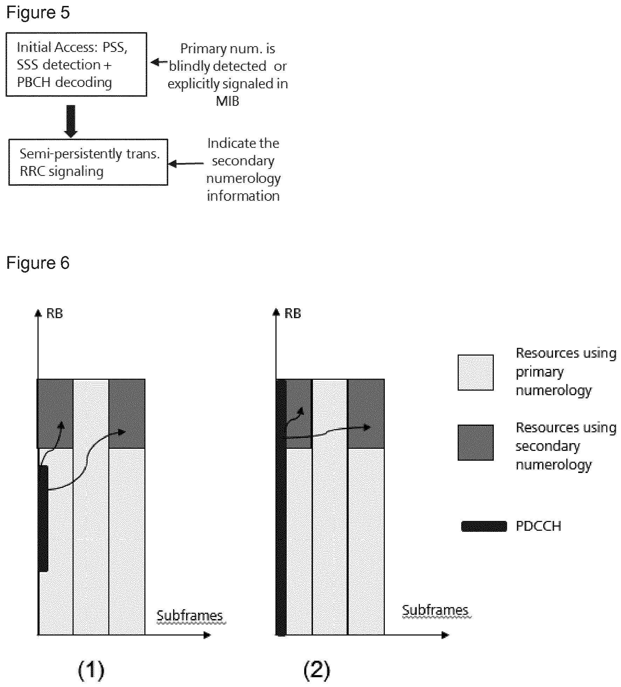

An alternative to dynamic allocation of secondary numerology is to use semi-static scheduling of secondary numerology. This may reduce the burden on downlink control channel capacity compared to dynamic allocation. With semi-static scheduling, UEs use secondary numerology following a periodic pattern. As discussed above, the primary numerology is informed by default (e.g. by standardization) or informed by system information (e.g. by MIB). In order to operate semi-statically with a secondary numerology the following steps can be taken:
- The secondary numerology to be used in accordance with semi-persistent operation can be configured by RRC signalling, for example as indicated in figure 5. The RRC signalling may contain control information indicating the secondary numerology type (by SN-TypeConfig message) and an SN-Indicator message. The SN-Indicator is used to help activate, reactivate or release a secondary numerology. Preferably, this RRC signalling does not directly activate the usage of secondary numerology. Its usage will be activated in the step 2) below.
- The procedure for semi-persistent configuration of secondary numerology for one or more UEs is as follows.
   1) UEs receive RRC signalling as described above and prepare to use secondary numerology.
   2) UEs activate the use of secondary numerology after decoding the control message on PDCCH using the SN-Indicator, and obtain the corresponding resource location, modulation and coding scheme (MCS), etc. In those resources where secondary numerology can be periodically applied, control information can be indicated in the PDCCH indicating whether in that resource secondary numerology will be applied or not.
   3) Optionally, UEs can be configured to automatically reactivate the use of secondary numerology after handover to a new base device.
   4) When the secondary numerology is to be released, the UEs do so after receiving the appropriate RRC signalling

There are two options for locating the PDCCH containing the corresponding DCI for secondary numerology configuration, as shown in figure 6. In contrast to the mechanism of figure 5, in figure 6 the usage of the secondary numerology follows a periodical pattern. The PDCCH is transmitted at the beginning of semi-persistent scheduling resources (e.g. not in each subframe).
- Option1: As shown in figure 6(1), the PDCCH is only transmitted with the primary numerology when resources are initially scheduled. The PDCCH is UE-specific. The DCI for configuration of the secondary numerology is contained in this PDCCH. It schedules the secondary numerology resources to be adopted.
- Option 2: As shown in figure 6(2), the PDCCH is transmitted with the primary and/or the secondary numerology and contains the relevant DCI for the numerology with which it is transmitted. In the case of a PDCCH containing secondary numerology control information, it is preferable for the UE to be informed in advance (e.g. by means of SIB) of the secondary numerology type and the location of the PDCCH in order to avoid excessive blind decoding attempts.

As an alternative to dynamic and semi-static configuration of secondary numerology, system-level numerology configuration can be applied statically. This can further reduce signalling overhead. In this approach any UEs that are associated with the base unit that are to use this configuration are informed by the base unit of the static configuration. This may be done at the initial access step, at handover to the base unit, or later if it is then determined that this configuration is to be used. As indicated above, the primary numerology type can be defined by default (e.g. by standardisation) or can be informed to a UE by the base device. The secondary numerology type is conveniently configured by information transmitted from the base device to the UE.

In some situations, a group of UEs that are associated with a base device may all be using or intended to use a common secondary numerology type. In that situation signalling overhead can be reduced by adopting the following approach.
- A parameter SN-G-RNTI is defined. This is an identifier which indicates the UEs of the group that are to apply the specific secondary numerology type, and provides the appropriate configuration of secondary numerology. This may be a Radio Network Temporary Identifier (RNTI) having an associated DCI indicating the secondary numerology configuration for the group of UEs. This RNTI is suitable for dynamic or semi-persistent configuration.
- UEs are informed by the base device of their identity so that they can know whether they are part of the SN-G-RNTI.
- The SN-G-RNTI is transmitted by the base device. UEs receiving the SN-G-RNTI establish whether they are part of the group of UEs identified in the SN-G-RNTI. The base device transmits the downlink control information (DCI) associated with the SN-G-RNTI in a broadcasting or multicasting manner so that the relevant UEs can receive it. The UEs that determined they were identified in the SN-G-RNTI process the DCI and action it to start using the specified secondary numerology. When the DCI is multicasted to specific UEs (e.g. of the group specified in the SN-G-RNTI) this can limit the space of the control information those UEs need to search to find the DCI.

In order to allow different numerologies to be used in different resource blocks and/or subframes, it is helpful to define a schema for identifying the resource block(s) and subframe(s) where a specific numerology is to be used.

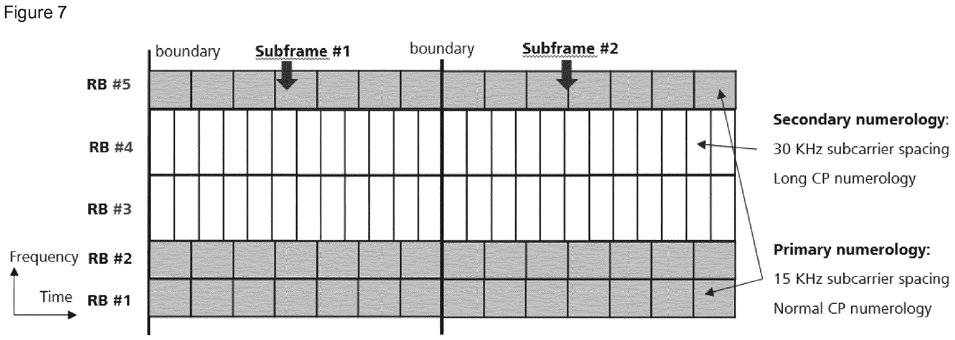

One option for such a schema is illustrated in figure 7. In the time domain, different numerologies are aligned at the subframe boundary by adjusting their CP length. This subframe alignment allows for a continuous numbering of subframes. In the frequency domain, continuous numbering of resource blocks (RBs) is applied: i.e. the RBs are counted in the order of their appearance irrespective of their underlying numerology. Guard tones are counted as resource blocks with zero utilization; the dimensioning of guard tones is controlled by the scheduler to avoid interference. In order to avoid numbering ambiguity for different numerologies, all UEs active in the system should know the current numerology settings. Therefore, this numbering scheme is suitable for static or semi-persistent mixed-numerology modes.

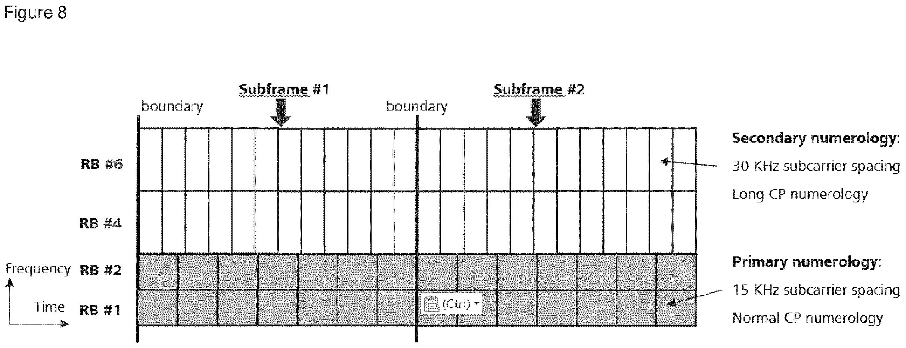

A second option for such a schema is illustrated in figure 8. In the time domain, the same numbering scheme is used as in the schema of figure 7. In the frequency domain, however, the RB numbering refers to the RB size defined by the primary numerology. Specifically, the numbering of the secondary numerology RB is equal to the numbering of the last RB plus the result of dividing the subcarrier spacing of the secondary numerology by the subcarrier spacing of the primary numerology. As a consequence, in this schema the RB numbering can be discontinuous if the secondary numerology's subcarrier spacing is a power of 2 of that in the primary numerology; and the RB numbering can be fractional if the secondary numerology subcarrier spacing is a negative power of 2 of that in primary numerology. As in the previous schema, guard tones are treated as resource blocks with zero utilization.

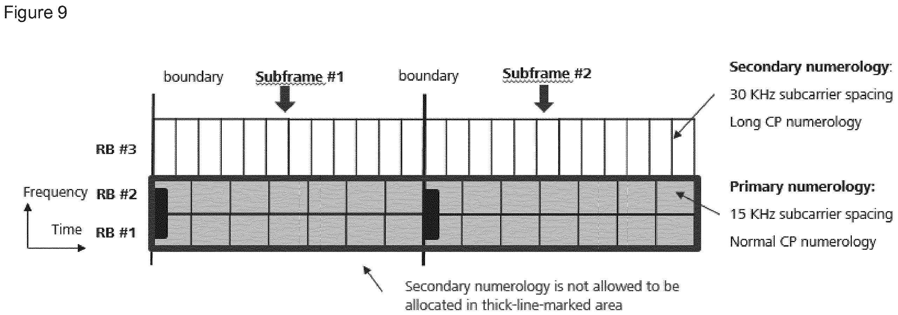

It is useful to regulate the allocation of secondary numerologies to facilitate the use of schemas such as those described above. In the time domain, secondary numerology resources can conveniently be allocated with the granularity of subframes. In the frequency domain, secondary numerology resources can conveniently be allocated with the granularity of RBs defined by the primary numerology. If the system control information (e.g. the common-search-space in LTE) occupies certain resources having the primary numerology, secondary numerology resources can be prohibited to be allocated in that subframe and RB. This is illustrated in figure 9, where the resources indicated by a thick line are the PDCCH.

The present signalling scheme has been defined above with reference to LTE, but it could be applied to other wired and wireless communication systems using OFDM or other frequency or time division multiplexing schemes that can use multiple numerologies.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present disclosure may consist of any such individual feature or combination of features. In view of the foregoing description it will be evident to a person skilled in the art that various modifications may be made within the scope of the disclosure.

(PUSCH) transmission. That format can include an SN-TypeConfig (an indication of a numerology type, which may be a few bits long); an SN-RBIdxConfig and a SN-SubframeldxConfig (indicators of the RB and the subframe index defining the resource to which the new numerology is to be applied). Further control information may be provided, for example any of HARQ process information, transmit power control (TPC) information and precoding information.
▪ Option 2: The DCI for dynamic numerology usage may be similar to the current DCI format in LTE but with the addition of an indication of numerology type and resource assignment (i.e. SN-TypeConfig and SN-RBIdxConfig and SN-SubframeldxConfig as discussed above).

As indicated in figure 4, two options are available for locating the PDCCH containing the DCI for secondary numerology configuration.
- Option1: As shown in figure 4(1), the PDCCH is only transmitted with the primary numerology. The PDCCH search space is pre-assigned by system information and is UE-specific. The DCI for the secondary numerology configuration is contained in the PDCCH. It schedules the secondary numerology resource usage.
- Option 2: As shown in figure 4(2), the PDCCH is transmitted with both the primary and the secondary numerology. The PDCCH transmitted with the primary or secondary numerology contains the DCI for data transmission with the primary or secondary numerology, respectively. In the case of the PDCCH containing secondary numerology control information, it is desirable for system information to notify the UE of the secondary numerology type and the PDCCH location beforehand to avoid excessive blind decoding attempts by the UE.

An alternative to dynamic allocation of secondary numerology is to use semi-static scheduling of secondary numerology. This may reduce the burden on downlink control channel capacity compared to dynamic allocation. With semi-static scheduling, UEs use secondary numerology following a periodic pattern. As discussed above, the primary numerology is informed by default (e.g. by standardization) or informed by system information (e.g. by MIB). In order to operate semi-statically with a secondary numerology the following steps can be taken:
- The secondary numerology to be used in accordance with semi-persistent operation can be configured by RRC signalling, for example as indicated in figure 5. The RRC signalling may contain control information indicating the secondary numerology type (by SN-TypeConfig message) and an SN-Indicator message. The SN-Indicator is used to help activate, reactivate or release a secondary numerology. Preferably, this RRC signalling does not directly activate the usage of secondary numerology. Its usage will be activated in the step 2) below.
- The procedure for semi-persistent configuration of secondary numerology for one or more UEs is as follows.
   1) UEs receive RRC signalling as described above and prepare to use secondary numerology.
   2) UEs activate the use of secondary numerology after decoding the control message on PDCCH using the SN-Indicator, and obtain the corresponding resource location, modulation and coding scheme (MCS), etc. In those resources where secondary numerology can be periodically applied, control information can be indicated in the PDCCH indicating whether in that resource secondary numerology will be applied or not.
   3) Optionally, UEs can be configured to automatically reactivate the use of secondary numerology after handover to a new base device.
   4) When the secondary numerology is to be released, the UEs do so after receiving the appropriate RRC signalling

There are two options for locating the PDCCH containing the corresponding DCI for secondary numerology configuration, as shown in figure 6. In contrast to the mechanism of figure 5, in figure 6 the usage of the secondary numerology follows a periodical pattern. The PDCCH is transmitted at the beginning of semi-persistent scheduling resources (e.g. not in each subframe).
- Option1: As shown in figure 6(1), the PDCCH is only transmitted with the primary numerology when resources are initially scheduled. The PDCCH is UE-specific. The DCI for configuration of the secondary numerology is contained in this PDCCH. It schedules the secondary numerology resources to be adopted.
- Option 2: As shown in figure 6(2), the PDCCH is transmitted with the primary and/or the secondary numerology and contains the relevant DCI for the numerology with which it is transmitted. In the case of a PDCCH containing secondary numerology control information, it is preferable for the UE to be informed in advance (e.g. by means of SIB) of the secondary numerology type and the location of the PDCCH in order to avoid excessive blind decoding attempts.

As an alternative to dynamic and semi-static configuration of secondary numerology, system-level numerology configuration can be applied statically. This can further reduce signalling overhead. In this approach any UEs that are associated with the base unit that are to use this configuration are informed by the base unit of the static configuration. This may be done at the initial access step, at handover to the base unit, or later if it is then determined that this configuration is to be used. As indicated above, the primary numerology type can be defined by default (e.g. by standardisation) or can be informed to a UE by the base device. The secondary numerology type is conveniently configured by information transmitted from the base device to the UE.

In some situations, a group of UEs that are associated with a base device may all be using or intended to use a common secondary numerology type. In that situation signalling overhead can be reduced by adopting the following approach.
- A parameter SN-G-RNTI is defined. This is an identifier which indicates the UEs of the group that are to apply the specific secondary numerology type, and provides the appropriate configuration of secondary numerology. This may be a Radio Network Temporary Identifier (RNTI) having an associated DCI indicating the secondary numerology configuration for the group of UEs. This RNTI is suitable for dynamic or semi-persistent configuration.
- UEs are informed by the base device of their identity so that they can know whether they are part of the SN-G-RNTI.
- The SN-G-RNTI is transmitted by the base device. UEs receiving the SN-G-RNTI establish whether they are part of the group of UEs identified in the SN-G-RNTI. The base device transmits the downlink control information (DCI) associated with the SN-G-RNTI in a broadcasting or multicasting manner so that the relevant UEs can receive it. The UEs that determined they were identified in the SN-G-RNTI process the DCI and action it to start using the specified secondary numerology. When the DCI is multicasted to specific UEs (e.g. of the group specified in the SN-G-RNTI) this can limit the space of the control information those UEs need to search to find the DCI.

In order to allow different numerologies to be used in different resource blocks and/or subframes, it is helpful to define a schema for identifying the resource block(s) and subframe(s) where a specific numerology is to be used.

One option for such a schema is illustrated in figure 7. In the time domain, different numerologies are aligned at the subframe boundary by adjusting their CP length. This subframe alignment allows for a continuous numbering of subframes. In the frequency domain, continuous numbering of resource blocks (RBs) is applied: i.e. the RBs are counted in the order of their appearance irrespective of their underlying numerology. Guard tones are counted as resource blocks with zero utilization; the dimensioning of guard tones is controlled by the scheduler to avoid interference. In order to avoid numbering ambiguity for different numerologies, all UEs active in the system should know the current numerology settings. Therefore, this numbering scheme is suitable for static or semi-persistent mixed-numerology modes.

A second option for such a schema is illustrated in figure 8. In the time domain, the same numbering scheme is used as in the schema of figure 7. In the frequency domain, however, the RB numbering refers to the RB size defined by the primary numerology. Specifically, the numbering of the secondary numerology RB is equal to the numbering of the last RB plus the result of dividing the subcarrier spacing of the secondary numerology by the subcarrier spacing of the primary numerology. As a consequence, in this schema the RB numbering can be discontinuous if the secondary numerology's subcarrier spacing is a power of 2 of that in the primary numerology; and the RB numbering can be fractional if the secondary numerology subcarrier spacing is a negative power of 2 of that in primary numerology. As in the previous schema, guard tones are treated as resource blocks with zero utilization.

It is useful to regulate the allocation of secondary numerologies to facilitate the use of schemas such as those described above. In the time domain, secondary numerology resources can conveniently be allocated with the granularity of subframes. In the frequency domain, secondary numerology resources can conveniently be allocated with the granularity of RBs defined by the primary numerology. If the system control information (e.g. the common-search-space in LTE) occupies certain resources having the primary numerology, secondary numerology resources can be prohibited to be allocated in that subframe and RB. This is illustrated in figure 9, where the resources indicated by a thick line are the PDCCH.

The present signalling scheme has been defined above with reference to LTE, but it could be applied to other wired and wireless communication systems using OFDM or other frequency or time division multiplexing schemes that can use multiple numerologies.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims.

## Claims

1. A communication terminal (2) for communicating with a base device (1) by frequency and/or time division multiplexing, the terminal being configured to transmit and/or receive signals to and/or from the base device using any of a plurality of numerology types, the communication terminal being configured to:
communicate with the base device using a primary numerology type and thereby receive a configuration word from the base device;
determine in dependence on the primary numerology type and the configuration word a secondary numerology type; and subsequently
communicate with the base device using the secondary numerology type when the secondary numerology type is activated;
wherein each numerology type specifies a corresponding subcarrier spacing and a corresponding cyclic prefix length, and the plurality of numerology types are aligned at respective subframe boundaries by adjusting their cyclic prefix length;
wherein the terminal is configured to store, for each of at least some of the numerology types, a mapping defining which of the plurality of numerology types are indicated by specific values of the configuration word, the terminal being configured to perform the step of determining the secondary numerology type by selecting the mapping corresponding to the primary numerology type and selecting as the secondary numerology type the numerology type indicated for the received configuration word in the mapping corresponding to the primary numerology type;
wherein the number of bits in the configuration word is less than the number of bits in a binary representation of the number of the plurality of numerology types.

2. The communication terminal according to claim 1, wherein the terminal is configured to:
determine a region of a frequency spectrum in which to operate; and
in dependence on that determination select the primary numerology type.

3. The communication terminal according to any one of the preceding claims, wherein the communication terminal is configured to receive from the base device an indication of a time and/or frequency space resource associated with the configuration word; and in dependence on that indication use the secondary numerology type for transmission and/or reception of signals in that resource.

4. The communication terminal according to claim 3, wherein the indication of a resource comprises an indication of a set of subcarriers and a length of a group of symbols defining that resource.

5. The communication terminal according to claim 4, wherein the indication of a resource indicates a time when the group of symbols will occur and/or a repetition schedule for the group of symbols.

6. The communication terminal according to any one of the preceding claims, wherein the communication terminal is configured to:
store a definition of one or more identifiers pertaining to the terminal;
receive a resource identifier associated with the configuration word; and
determine whether the received resource identifier matches the definition of one or more identifiers; and
wherein the terminal is configured such that the step of communicating with the base device using the secondary numerology type is conditional on the received resource identifier matching the definition of one or more identifiers;
wherein the resource identifier is indicative of a single terminal associated with the base device or wherein the resource identifier is indicative of multiple terminals associated with the base device.

7. The communication terminal according to any one of the preceding claims, wherein the communication terminal is configured to recover control channel information transmitted by the base device by means of one or both of the primary and the secondary numerology types.

8. A communication base device (1) for communicating with a terminal (2) by frequency and/or time division multiplexing, the base device being configured to transmit and/or receive signals to and/or from the terminal using any of a plurality of numerology types, the base device being configured to:
communicate with the terminal device using a primary numerology types and thereby transmit a configuration word to the terminal, the configuration word indicating a secondary numerology type; and subsequently
communicate with the terminal using the secondary numerology type when the secondary numerology type is activated;
wherein each numerology type specifies a corresponding subcarrier spacing and a corresponding cyclic prefix length, and the plurality of numerology types are aligned at respective subframe boundaries by adjusting their cyclic prefix length;
wherein the base station is configured to store, for each of at least some of the numerology types, a mapping defining which of the plurality of numerology types are indicated by specific values of the configuration word, the base station being configured to perform the step of transmitting a configuration word to the terminal, by selecting the secondary numerology type, selecting the mapping corresponding to the primary numerology and selecting as the configuration word for transmitting to the terminal the configuration word indicated for the selected secondary numerology type in the mapping corresponding to the primary numerology;
wherein the number of bits in the configuration word is less than the number of bits in the binary representation of the number of the plurality of numerology types.

9. The communication base device according to claim 8, wherein the base device is configured to operate in a region of the frequency spectrum; and to select in dependence on that region the primary numerology type.

10. The communication base device according to any one of the preceding claims, wherein the base device is configured to transmit to the terminal an indication of a time and/or frequency space resource associated with the configuration word.

11. The communication base device according to any one of the preceding claims, wherein the indication of a resource comprises an indication of a set of subcarriers and a length of a group of symbols defining that resource.

12. The communication base device according to claim 11, wherein the indication of a resource indicates a time when the group of symbols will occur and/or a repetition schedule for the group of symbols.

13. The communication base device according to any one of the preceding claims, wherein the communication base device is configured to: store a definition of one or more identifiers pertaining to terminals associated therewith; and transmit in association with the configuration word a resource identifier matching the said terminal;
wherein the resource identifier is indicative of a single terminal associated with the base device; or wherein the resource identifier is indicative of multiple terminals associated with the base device.

14. The communication base device according to any one of the preceding claims, wherein the communication base device is configured to transmit control channel information to the terminal by means of one or both of the primary and the secondary numerology types.

## Patentansprüche

1. Kommunikationsendgerät (2) zum Kommunizieren mit einer Basisvorrichtung (1) durch Frequenz- und/oder Zeitmultiplex, wobei das Endgerät dazu konfiguriert ist, über eine beliebige einer Vielzahl von Numerologiearten Signale an die Basisvorrichtung zu übertragen und/oder von dieser zu empfangen, wobei das Kommunikationsendgerät für Folgendes konfiguriert ist:
Kommunizieren mit der Basisvorrichtung unter Verwendung einer primären Numerologieart und dadurch Empfangen eines Konfigurationsworts von der Basisvorrichtung;
Bestimmen einer sekundären Numerologieart in Abhängigkeit von der primären Numerologieart und des Konfigurationsworts; und anschließend
Kommunizieren mit der Basisvorrichtung unter Verwendung der sekundären Numerologieart, wenn die sekundäre Numerologieart aktiviert ist;
wobei jede Numerologieart einen entsprechenden Subträgerabstand und eine entsprechende zyklische Präfixlänge vorgibt und die Vielzahl von Numerologiearten durch Einstellen ihrer jeweiligen zyklischen Präfixlänge an jeweiligen Subframegrenzen ausgerichtet wird;
wobei das Endgerät dazu konfiguriert ist, für jede zumindest einiger der Numerologiearten eine Zuordnung zu speichern, die definiert, welche der Vielzahl von Numerologiearten durch bestimmte Werte des Konfigurationsworts angegeben werden, wobei das Endgerät dazu konfiguriert ist, den Schritt des Bestimmens der sekundären Numerologieart durchzuführen, indem es die Zuordnung auswählt, die der primären Numerologieart entspricht, und diejenige Numerologieart als die sekundäre Numerologieart auswählt, die in der Zuordnung, die der primären Numerologieart entspricht, für das empfangene Konfigurationswort angegeben ist;
wobei die Bitanzahl in dem Konfigurationswort kleiner ist als die Bitanzahl in einer binären Darstellung der Anzahl der Vielzahl von Numerologiearten.

2. Kommunikationsendgerät nach Anspruch 1, wobei das Endgerät für Folgendes konfiguriert ist:
Bestimmen eines Bereichs eines Frequenzspektrums, in dem gearbeitet werden soll; und
Auswählen der primären Numerologieart in Abhängigkeit von dieser Bestimmung.

3. Kommunikationsendgerät nach einem der vorhergehenden Ansprüche, wobei das Kommunikationsendgerät dazu konfiguriert ist, von der Basisvorrichtung eine Angabe einer dem Konfigurationswort zugeordneten Zeit- und/oder Frequenzraumressource zu empfangen und in Abhängigkeit von dieser Angabe die sekundäre Numerologieart für die Übertragung und/oder den Empfang von Signalen in dieser Ressource zu verwenden.

4. Kommunikationsendgerät nach Anspruch 3, wobei die Angabe einer Ressource eine Angabe eines Subträgersatzes und einer Länge einer die Ressource definierenden Gruppe von Symbolen umfasst.

5. Kommunikationsendgerät nach Anspruch 4, wobei die Angabe einer Ressource einen Zeitpunkt, an dem diese Gruppe von Symbolen auftreten wird, und/oder einen Wiederholungsplan für die Gruppe von Symbolen angibt.

6. Kommunikationsendgerät nach einem der vorhergehenden Ansprüche, wobei das Kommunikationsendgerät für Folgendes konfiguriert ist:
Speichern einer Definition für eine oder mehrere dem Endgerät zugehörige Kennungen;
Empfangen einer dem Konfigurationswort zugeordneten Ressourcenkennung; und
Bestimmen, ob die empfangene Ressourcenkennung mit der Definition für eine oder mehrere Kennungen übereinstimmt; und wobei das Endgerät so konfiguriert ist, dass der Schritt des Kommunizierens mit der Basisvorrichtung unter Verwendung der sekundären Numerologieart an die Bedingung geknüpft ist, dass die empfangene Ressourcenkennung mit der Definition für eine oder mehrere Kennungen übereinstimmt;
wobei die Ressourcenkennung ein einzelnes der Basisvorrichtung zugeordnetes Endgerät angibt oder wobei die Ressourcenkennung mehrere der Basisvorrichtung zugeordnete Endgeräte angibt.

7. Kommunikationsendgerät nach einem der vorhergehenden Ansprüche, wobei das Kommunikationsendgerät dazu konfiguriert ist, durch die Basisvorrichtung übertragene Kanalsteuerungsinformationen mittels einer oder beider der primären und der sekundären Numerologieart wiederherzustellen.

8. Kommunikationsbasisvorrichtung (1) zum Kommunizieren mit einem Endgerät (2) durch Frequenz- und/oder Zeitmultiplex, wobei die Basisvorrichtung dazu konfiguriert ist, unter Verwendung einer beliebigen einer Vielzahl von Numerologiearten Signale an das Endgerät zu übertragen und/oder von diesem zu empfangen, wobei die Basisvorrichtung für Folgendes konfiguriert ist:
Kommunizieren mit der Endgerätvorrichtung unter Verwendung einer primären Numerologieart und dadurch Übertragen eines Konfigurationsworts an das Endgerät, wobei das Konfigurationswort eine sekundäre Numerologieart angibt; und anschließend
Kommunizieren mit dem Endgerät unter Verwendung der sekundären Numerologieart, wenn die sekundäre Numerologieart aktiviert ist;
wobei jede Numerologieart einen entsprechenden Subträgerabstand und eine entsprechende zyklische Präfixlänge vorgibt und die Vielzahl von Numerologiearten durch Einstellen ihrer zyklischen Präfixlänge an jeweiligen Subframegrenzen ausgerichtet wird;
wobei die Basisstation dazu konfiguriert ist, für jede zumindest einiger der Numerologiearten eine Zuordnung zu speichern, die definiert, welche der Vielzahl von Numerologiearten durch bestimmte Werte des Konfigurationsworts angegeben werden, wobei die Basisstation dazu konfiguriert ist, den Schritt des Übertragens eines Konfigurationsworts an das Endgerät durchzuführen, indem sie die sekundäre Numerologieart auswählt, die Zuordnung auswählt, die der primären Numerologie entspricht, und dasjenige Konfigurationswort als das Konfigurationswort, das an das Endgerät übertragen werden soll, auswählt, das in der Zuordnung, die der primären Numerologie entspricht, für die ausgewählte sekundäre Numerologieart angegeben ist;
wobei die Bitanzahl in dem Konfigurationswort kleiner ist als die Bitanzahl in der binären Darstellung der Anzahl der Vielzahl von Numerologiearten.

9. Kommunikationsbasisvorrichtung nach Anspruch 8, wobei die Basisvorrichtung dazu konfiguriert ist, in einem Bereich des Frequenzspektrums zu arbeiten und die primäre Numerologieart in Abhängigkeit von diesem Bereich auszuwählen.

10. Kommunikationsbasisvorrichtung nach einem der vorhergehenden Ansprüche, wobei die Basisvorrichtung dazu konfiguriert ist, eine Angabe einer dem Konfigurationswort zugeordneten Zeit- und/oder Frequenzraumressource an das Endgerät zu übertragen.

11. Kommunikationsbasisvorrichtung nach einem der vorhergehenden Ansprüche, wobei die Angabe einer Ressource eine Angabe eines Subträgersatzes und einer Länge einer die Ressource definierenden Gruppe von Symbole umfasst.

12. Kommunikationsbasisvorrichtung nach Anspruch 11, wobei die Angabe einer Ressource einen Zeitpunkt, an dem die Gruppe von Symbolen auftreten wird, und/oder einen Wiederholungsplan für die Gruppe von Symbolen angibt.

13. Kommunikationsbasisvorrichtung nach einem der vorhergehenden Ansprüche, wobei die Kommunikationsbasisvorrichtung für Folgendes konfiguriert ist:
Speichern einer Definition für eine oder mehrere dieser zugeordneten Endgeräten zugehörige Kennungen; und Übertragen einer mit dem Endgerät übereinstimmenden Ressourcenkennung in Verbindung mit dem Konfigurationswort;
wobei die Ressourcenkennung ein einzelnes der Basisvorrichtung zugeordnetes Endgerät angibt oder wobei die Ressourcenkennung mehrere der Basisvorrichtung zugeordnete Endgeräte angibt.

14. Kommunikationsbasisvorrichtung nach einem der vorhergehenden Ansprüche, wobei die Kommunikationsbasisvorrichtung dazu konfiguriert ist, mittels einer oder beider der primären und der sekundären Numerologieart Kanalsteuerungsinformationen an das Endgerät zu übertragen.

## Revendications

1. Terminal de communication (2) permettant de communiquer avec un dispositif de base (1) par multiplexage par répartition en fréquence et/ou dans le temps, le terminal étant conçu pour transmettre et/ou recevoir des signaux vers et/ou à partir du dispositif de base au moyen d'un quelconque parmi une pluralité de types de numérologie, le terminal de communication étant conçu pour :
communiquer avec le dispositif de base au moyen d'un type de numérologie primaire et recevoir ainsi un mot de configuration provenant du dispositif de base ;
déterminer, en fonction du type de numérologie primaire et du mot de configuration, un type de numérologie secondaire ; et par la suite
communiquer avec le dispositif de base au moyen du type de numérologie secondaire lorsque le type de numérologie secondaire est activé ;
dans lequel chaque type de numérologie spécifie un espacement de sous-porteuse correspondant et une longueur de préfixe cyclique correspondante, et la pluralité de types de numérologie sont alignés à des limites de sous-trame respectives en réglant leur longueur de préfixe cyclique ;
le terminal étant conçu pour stocker, pour chacun parmi au moins certains des types de numérologie, un mappage définissant quels types parmi la pluralité de types de numérologie sont indiqués par des valeurs spécifiques du mot de configuration, le terminal étant conçu pour exécuter l'étape de détermination du type de numérologie secondaire en sélectionnant le mappage correspondant au type de numérologie primaire et en sélectionnant comme type de numérologie secondaire le type de numérologie indiqué pour le mot de configuration reçu dans le mappage correspondant au type de numérologie primaire ;
dans lequel le nombre de bits dans le mot de configuration est inférieur au nombre de bits dans une représentation binaire du nombre de la pluralité de types de numérologie.

2. Terminal de communication selon la revendication 1, le terminal étant conçu pour :
déterminer une région d'un spectre de fréquences dans laquelle opérer ; et
en fonction de cette détermination, sélectionner le type de numérologie primaire.

3. Terminal de communication selon l'une quelconque des revendications précédentes, le terminal de communication étant conçu pour recevoir, à partir du dispositif de base, une indication d'une ressource d'intervalle de temps et/ou de fréquence associée au mot de configuration ; et, en fonction de cette indication, utiliser le type de numérologie secondaire pour la transmission et/ou la réception de signaux dans cette ressource.

4. Terminal de communication selon la revendication 3, dans lequel l'indication d'une ressource comprend une indication d'un ensemble de sous-porteuses et une longueur d'un groupe de symboles définissant cette ressource.

5. Terminal de communication selon la revendication 4, dans lequel l'indication d'une ressource indique un moment où le groupe de symboles se produira et/ou un programme de répétition pour le groupe de symboles.

6. Terminal de communication selon l'une quelconque des revendications précédentes, le terminal de communication étant conçu pour :
stocker une définition d'un ou de plusieurs identifiants relatifs au terminal ;
recevoir un identifiant de ressource associé au mot de configuration ; et
déterminer si l'identifiant de ressource reçu correspond ou non à la définition d'un ou de plusieurs identifiants ; et
le terminal étant conçu de sorte que l'étape de communication avec le dispositif de base au moyen du type de numérologie secondaire dépend du fait que l'identifiant de ressource reçu corresponde à la définition d'un ou de plusieurs identifiants ; dans lequel l'identifiant de ressource indique un terminal unique associé au dispositif de base ou dans lequel l'identifiant de ressource indique plusieurs terminaux associés au dispositif de base.

7. Terminal de communication selon l'une quelconque des revendications précédentes, le terminal de communication étant conçu pour récupérer des informations de canal de commande transmises par le dispositif de base au moyen d'un ou des deux types de numérologie primaire et secondaire.

8. Dispositif de base de communication (1) permettant de communiquer avec un terminal (2) par multiplexage par répartition en fréquence et/ou dans le temps, le dispositif de base étant conçu pour transmettre et/ou recevoir des signaux vers et/ou à partir du terminal au moyen d'un quelconque parmi une pluralité de types de numérologie, le dispositif de base étant conçu pour :
communiquer avec le dispositif terminal au moyen d'un type de numérologie primaire et transmettre ainsi un mot de configuration au terminal, le mot de configuration indiquant un type de numérologie secondaire ; et par la suite communiquer avec le terminal au moyen du type de numérologie secondaire lorsque le type de numérologie secondaire est activé ;
dans lequel chaque type de numérologie spécifie un espacement de sous-porteuse correspondant et une longueur de préfixe cyclique correspondante, et la pluralité de types de numérologie sont alignés à des limites de sous-trame respectives en réglant leur longueur de préfixe cyclique ;
dans lequel la station de base est conçue pour stocker, pour chacun parmi au moins certains des types de numérologie, un mappage définissant quels types parmi la pluralité de types de numérologie sont indiqués par des valeurs spécifiques du mot de configuration, la station de base étant conçue pour exécuter l'étape de transmission d'un mot de configuration au terminal, en sélectionnant le type de numérologie secondaire, en sélectionnant le mappage correspondant à la numérologie primaire et en sélectionnant, comme mot de configuration à transmettre au terminal, le mot de configuration indiqué pour le type de numérologie secondaire sélectionné dans le mappage correspondant à la numérologie primaire ;
dans lequel le nombre de bits dans le mot de configuration est inférieur au nombre de bits dans la représentation binaire du nombre de la pluralité de types de numérologie.

9. Dispositif de base de communication selon la revendication 8, le dispositif de base étant conçu pour fonctionner dans une région du spectre de fréquences ; et pour sélectionner, en fonction de cette région, le type de numérologie primaire.

10. Dispositif de base de communication selon l'une quelconque des revendications précédentes, le dispositif de base étant conçu pour transmettre au terminal une indication d'une ressource d'intervalle de temps et/ou de fréquence associée au mot de configuration.

11. Dispositif de base de communication selon l'une quelconque des revendications précédentes, dans lequel l'indication d'une ressource comprend une indication d'un ensemble de sous-porteuses et une longueur d'un groupe de symboles définissant cette ressource.

12. Dispositif de base de communication selon la revendication 11, dans lequel l'indication d'une ressource indique un moment où le groupe de symboles se produira et/ou un programme de répétition pour le groupe de symboles.

13. Dispositif de base de communication selon l'une quelconque des revendications précédentes, le dispositif de base de communication étant conçu pour : stocker une définition d'un ou de plusieurs identifiants relatifs aux terminaux qui lui sont associés ; et transmettre, en association avec le mot de configuration, un identifiant de ressource correspondant audit terminal ;
dans lequel l'identifiant de ressource indique un terminal unique associé au dispositif de base ; ou dans lequel l'identifiant de ressource indique plusieurs terminaux associés au dispositif de base.

14. Dispositif de base de communication selon l'une quelconque des revendications précédentes, le dispositif de base de communication étant conçu pour transmettre des informations de canal de commande au terminal au moyen d'un ou des deux types de numérologie primaire et secondaire.
